# EUROPEAN PATENT SPECIFICATION

(11) **EP 0 798 485 B1**
(45) Date of publication and mention of the grant of the patent: **22.05.2002**
(21) Application number: 97104388.0
(22) Date of filing: 14.03.1997
(51) Int. Cl.: F16F 9/02, E05F 1/10

(54) **Device for supporting a lid structure**
Vorrichtung zum Stützen einer Deckelstruktur
Dispositif pour supporter une structure de couvercle

(30) Priority: 29.03.1996 JP 9963796
(43) Date of publication of application: 01.10.1997
(73) Proprietor: SHOWA CORPORATION, Gyoda-shi, Saitama (JP)
(72) Inventor: Terada, Makoto, c/o Showa Corporation, Iwata-gun, Shizuoka (JP)
(74) Representative: Casalonga, Axel

(56) References cited:
- DE-A- 4 103 521
- GB-A- 2 163 517
- JP-A- 53 001 764

## Description

This invention relates to a device for supporting a structure such as a back door or trunk lid of a motor vehicle.

A road vehicle, particularly a four-wheel vehicle generally has back doors or trunk doors (lid structure), capable of opening and closing along or around a horizontal axis of the vehicle body. Two gas springs are used in parallel arranged between the back door and the car body so that the force required for opening the back door can be reduced by the assisting force of the gas spring.

One form of often used gas spring is an inverted type gas spring, which has a cylinder at the upper side and a rod at the lower side when the back door is closed. One form of such inverted type gas spring is an inverted position turning type gas spring, in which a cylinder is attached to a car body and a rod is attached to a back door so as to position the gas spring at an angle when the back door is closed. In this case, the cylinder and the rod turn their position between open and closed states of the back door.

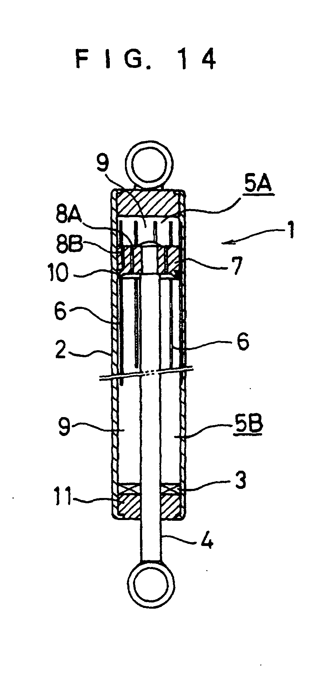

Japanese Patent Laid-Open Application (JP-A) No. 53-1764 discloses such an inverted position turning type gas spring, which uses only a gas (air) to improve damping operation of the gas spring when being fully extended. As shown in Fig. 14, a gas spring 1 of this type includes a cylinder 2 which contains a very small amount of oil to lubricate a gas seal 3. On the inner surface of the cylinder 2, cylinder grooves 6 are formed by notching in an axial direction so that a piston-side chamber 5A and a rod-side chamber 5B can communicate with each other around a piston. The gas spring also includes a piston 7 through which an inner orifice 8A and an outer orifice 8B are formed.

In the process of compressing the gas spring 1, a gas 9 enclosed within the piston-side chamber 5A flows into the rod-side chamber 5B through the cylinder grooves 6, and the inner orifice 8A and the outer orifice 8B, so that little or no damping force occurs.

During the extension process, since a lip 10 provided on the piston 7 blocks the outer orifice 8B, the gas 9 within the rod-side chamber 5B flows into the piston-side chamber 5A through the cylinder grooves 6 and the inner orifice 8A, and thereby an extension damping force occurs. In this process, although a reaction force of the gas within the cylinder 2 acts on the rod 4 to move it in an extending direction of the gas spring 1, the extension damping force causes the transit speed of the rod 4 in the extending direction (i.e., extension speed of the gas spring 1) to be controlled properly.

When the gas spring 1 has been fully extended at the end of the extending process, the piston 7 comes to an area (gas-lock area), where no cylinder groove 6 is formed, to define a gas-lock chamber with the gas seal 3 provided at the opening end of the cylinder 2, the rod guide 11, and the piston 7. Therefore, the fully extended gas spring 1 is damped (gas-locked) by the flow resistance of the gas 9 through the inner orifice 8A.

As previously described, a device for supporting or mounting a back door onto a car body generally comprises two gas springs 1 arranged on both sides of the back door. In the gas spring 1, however, a problem arises that a swish sound is generated when the gas (or air) passes through the cylinder grooves 6 in the extending process. Such a swish sound occurs due to a turbulent flow of the gas caused when a Reynolds number Re of the gas passing through the cylinder grooves 6 becomes a critical Reynolds number Rec or more, where Rec = 2310.

In this case, the Reynolds number Re can be made smaller than the critical Reynolds number Rec by reducing the sectional area of each cylinder groove 6. However, the reduction of the sectional area of the cylinder groove 6 causes an increased extension damping force in the cylinder groove 6. Therefore, another problem arises because the extension speed of the gas spring 1 is slowed down more than desired for proper opening speed of the back door.

The present invention has been made under the circumstances as aforementioned, and an object of the present invention is to provide a device for supporting a lid or door structure, which is made possible to reduce a swish sound and to improve the cost-efficiency.

In the invention, there is provided a device for supporting a horizontally pivoted vehicle door, in which gas springs arranged apart from each other support both sides of the lid or door structure that is rotatably held by or mounted on the body through a horizontal shaft, one gas spring arranged on one side of the lid or door structure comprising: a cylinder enclosing a gas, in which seal and guide members are arranged in an opening portion provided at one end thereof; a rod having a piston at one end thereof and slidably arranged within the cylinder together with the piston through the seal and guide members; a passage provided in the piston for communicating between both chambers divided by the piston; a reaction force applying mechanism provided within the cylinder for causing a reaction force to force the rod in an extending direction when the gas spring is extended; an extension damping force applying mechanism which includes a cylinder groove formed in an axial direction throughout the entire range of the cylinder except an area nearby the opening end portion thereof, and seal means arranged in the piston and having a check valve function for opening the passage when the gas spring is compressed, such that an extension damping force is caused while the gas passes through the cylinder groove in the extending process; and a gas-lock mechanism which defines a gas-lock chamber nearby the opening end portion of the cylinder among the seal and guide members, the piston, and the seal means so as to damp the piston and the rod when the gas spring has been fully extended at the end of the extending process, and the other gas spring arranged on the other side of the lid or door structure comprising: a cylinder enclosing a gas, in which seal and guide members are arranged in an opening portion provided at one end thereof; a rod having a piston at one end thereof and slidably arranged within the cylinder together with the piston through the seal and guide members; a passage provided in the piston for communicating between both chambers divided by the piston, the sectional area of which is formed to be a size sufficient to generate laminar flow resulting in little or no swish sound; and a reaction force applying mechanism provided within the cylinder for causing a reaction force to force the rod in an extending direction when the gas spring is extended.

In the invention, the passage is provided in the gas spring, and is arranged on the other side of the lid or door structure, for communicating between both chambers divided by the piston. There is an annular clearance formed between the outer edge of the piston and the inner surface of the cylinder, the sectional area of which is sufficient to generate little or no swish sound by eliminating seal means having a check valve function from the outer edge of the piston.

In the invention, the gas springs are arranged on both sides of the lid or door structure which are constituted with the same parts in the same manner except as to whether the cylinder groove and the seal means having a check valve function are present, and whether an annular groove is formed on the outer edge of the piston for arranging the seal means.

The invention has the following effect.

The gas spring arranged on one side of the lid or door structure includes the extension damping force applying mechanism and the gas-lock mechanism in addition to the reaction force applying mechanism, while the gas spring arranged on the other side of the lid or door structure includes only the reaction force applying mechanism without the extension damping force applying mechanism and the gas-lock mechanism. Further, the gas spring arranged on the other side of the lid or door structure has the passage for communicating between chambers divided by the piston, the sectional area will generate little or no swish sound. Therefore, although the gas spring arranged on one side of the lid or door structure emits a swish sound from the cylinder groove of the extension damping force applying mechanism, the gas spring arranged on the other side of the lid or door structure emits little or no swish sound. As a result, the lid or door structure supporting device according to the present invention can reduce the total amount of generated swish sound to a greater extent than the case where the same-type gas springs, each having the reaction force applying mechanism, the extension damping force applying mechanism, and the airlock mechanism, are used on each side of the lid or door structure.

In the gas spring arranged on the other side of the lid or door structure, the cylinder groove is not formed in the cylinder, and the seal means having the check valve function is not provided in the piston. This reduces the cost of manufacturing such a gas spring and hence the total cost of the lid or door structure supporting device.

The invention has the following effect.

The gas springs arranged on both sides of the lid structure are constituted with the same parts in the same manner except with regard to presence or absence of the cylinder groove and the seal means having a check valve function and the annular groove in the outer edge of the piston. It is therefore permissible to use the required parts commonly between both gas springs, and hence reducing the total cost of manufacturing the lid or door structure supporting device.

The present invention will be understood more fully from the detailed description given hereinbelow and from the accompanying drawings of the preferred embodiments of the invention, which are given by way of example only, and are not intended to limit the present invention.

In the drawings:
Fig. 1 is a perspective view showing a back-door supporting device to which an embodiment of a lid or door structure supporting device according to the present invention is applied;
Fig. 2 is a side view showing the back-door supporting device of Fig. 1;
Fig. 3 is a side view partly in section, which shows one of the gas springs in the back-door supporting device of Fig. 1;
Fig. 4 is a side view partly in section, which shows a cylinder of the gas spring of Fig. 3;
Fig. 5 is a sectional view showing a piston of the gas spring of Fig. 3;
Fig. 6 is a diagram showing the piston of Fig. 5 as viewed from the plane indicated by the arrow VI in Fig. 5;
Fig. 7 is a sectional view taken along the plane of line VII-VII of Fig. 4;
Fig. 8 is an enlarged sectional view showing the portion VIII of Fig. 7;
Fig. 9 is a sectional view taken along the plane of line IX-IX of Fig. 4;
Fig. 10 is a side view partly in section, which shows the other of the gas springs in the back-door supporting device of Fig. 1;
Fig. 11 is a side view partly in section, which shows a cylinder of the gas spring of Fig. 10;
Fig. 12 is a sectional view showing a piston of the gas spring of Fig. 10;
Fig. 13 is a diagram showing the piston of Fig. 12 as viewed from the plane indicated by the arrow XIII;
Fig. 14 is a sectional view showing a gas spring in a conventional back-door supporting device.

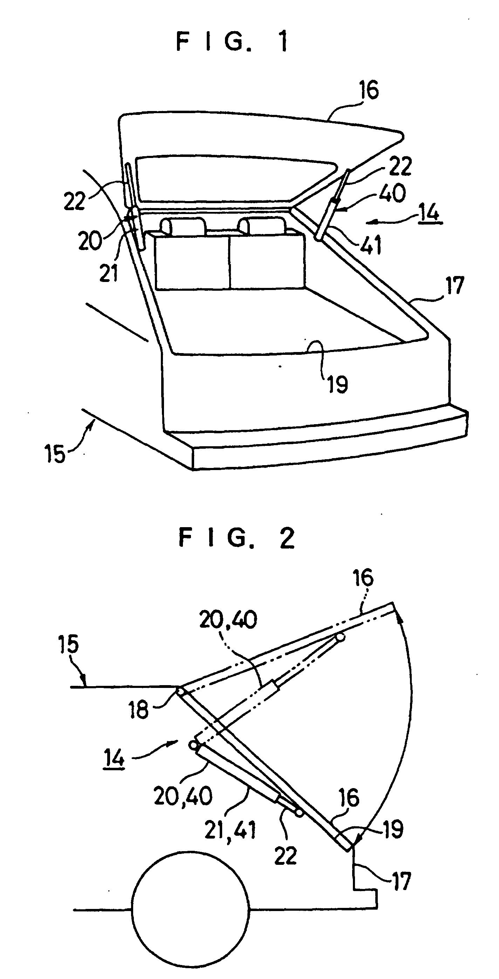

As shown in Figs. 1 and 2, a four-wheel vehicle 15 has a trunk or back door 16 as a door structure, which is pivotally mounted on a car body 17 through a horizontal shaft 18 so that a trunk room or opening portion 19 provided at the back side of the car body 17 can be opened or closed. The back door 16 is supported by a back-door supporting device 14 having two gas springs 20 and 40. The gas springs 20 and 40 are arranged apart from each other in a width-wise direction of the vehicle 15 such that the gas spring 20 supports one side of the back door 16 and the gas spring 40 supports the other side of the back door 16.

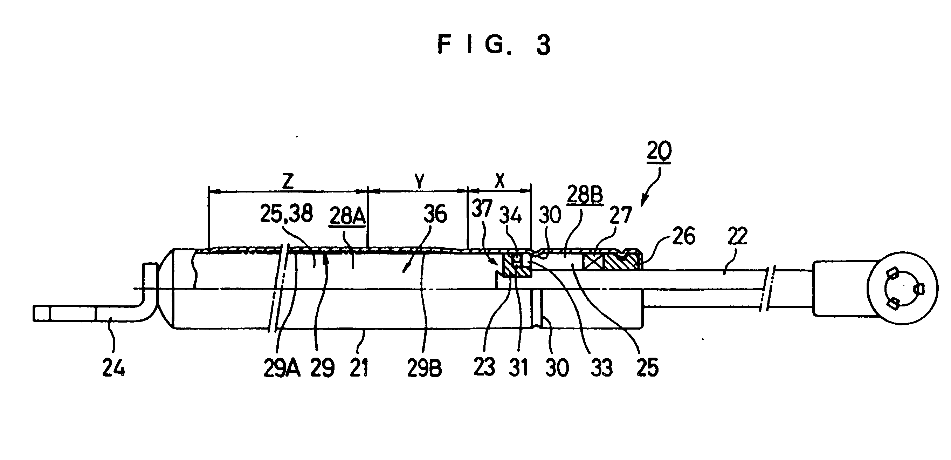

The above-mentioned gas spring 20 is used as a gas spring of inverted position turning type. As shown in Fig. 3, the gas spring 20 has a piston 23 that is slidable within a cylinder 21, one end of the cylinder 21 being closed and the position of the piston 23 being fixed by applying pressure to one end of a rod 22. A bracket 24 of the cylinder 21 is attached to the car body 17 of the four-wheel vehicle 15. The other end of the rod 22 is attached to the back door 16 thereof.

Gas or air 25 is enclosed within the cylinder 21, and a rod guide 26 and a gas seal 27 are arranged as seal and guide members in an opening portion provided at one end of the cylinder 21. The rod guide 26 leads the rod 22 to move as the piston 23 slides through the cylinder 21, while the gas seal 27 prevents leakage of air 25. A very small amount of oil is enclosed within the cylinder 21 so that the gas seal 27 can be lubricated sufficiently to maintain good sealing characteristics and to prevent leakage of air 25 out of the cylinder 21 when closing the back door 16.

The cylinder 21 is divided by the piston 23 into two sections, one is a rod-side chamber 28B in which the rod 22 is housed. The other is a piston-side chamber 28A in which the rod 22 is not housed. The air 25 is enclosed in both the chambers 28A and 28B. Although there is no difference in pressure of the air 25 (reaction force of the air) between the piston-side chamber 28A and the rod-side chamber 28B, a pressure-receiving area of the piston 23 in the piston-side chamber 28A is larger by a sectional area of the rod 22 than that in the rod-side chamber 28B. Therefore, when extending the gas spring 20, the reaction force within the piston-side chamber 28A acts to move the rod 22 and the piston 23 in an extending direction of the gas spring 20, i.e., the air 25 serves as a reaction force applying mechanism 38.

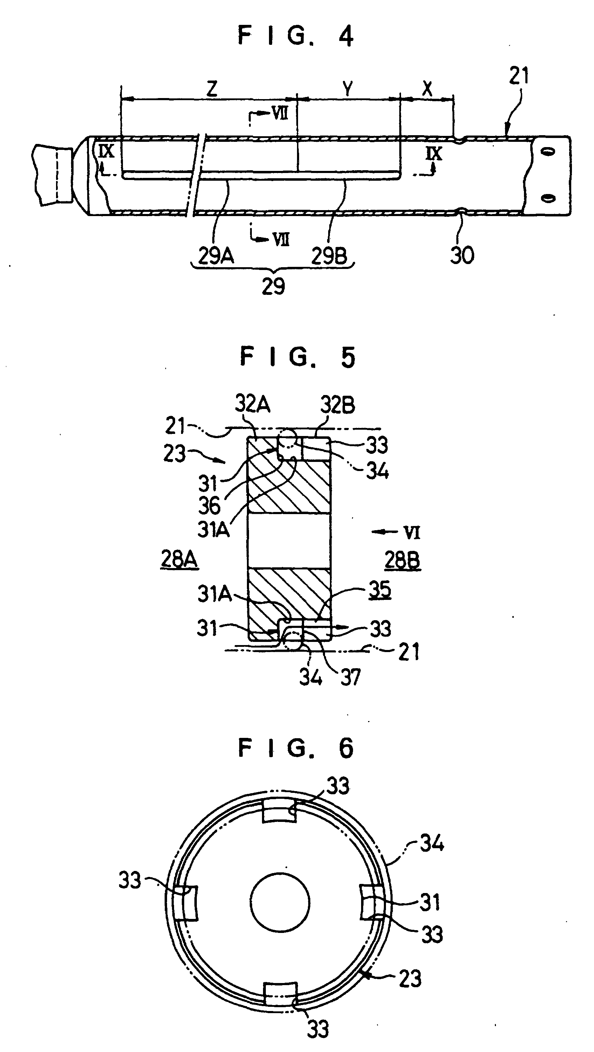

As shown in Figs. 3 and 4, a cylinder groove 29 is formed on the inner surface of the cylinder 21. The cylinder groove 29 is formed by outward extension of the inner surface of the cylinder 21, for example, plastic working such as roll forming. In the cylinder 21, a stopper 30 is also provided nearby the position where the rod guide 26 and the gas seal 27 are located, thereby reducing the diameter of the cylinder 21 centrally. The piston 23 strikes the stopper 30 and stops moving forward under control of the stopper 30. At the extension end position, the piston 23 strikes the stopper 30. The cylinder groove 29 is formed to extend in the axial direction of the cylinder 21 substantially throughout the full range of piston 23 stroke except for an area near the extension end, and the area near the stopper 30 (the area without cylinder groove 29) is an airlock area X.

One end of the cylinder groove 29, which is a closed-end side of the cylinder 21, extends from the position where an O-ring 34 is located. The O-ring 34 is set in the outer edge of the piston 23 when the gas spring 20 is most compressed. The O-ring 34 divides the cylinder 21 into the chambers 28A and 28B provided at opposite sides of the piston 23 and communicates between the chambers 28A and 28B through cylinder groove 29 even when the gas spring 20 is most compressed. The cylinder groove 29 may be extended to the closed end of the cylinder 21.

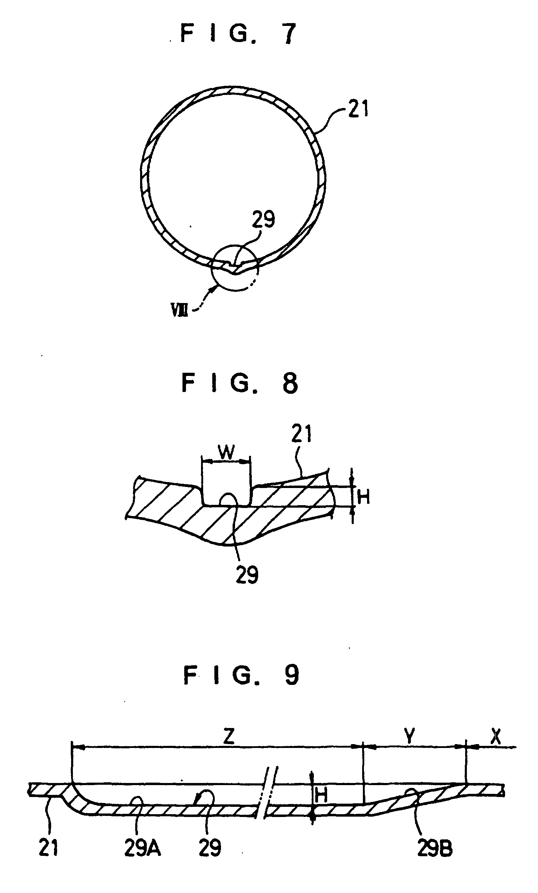

As shown in Figs. 7 to 9, the cylinder groove 29 is constituted of two sections 29A and 29B. One section 29A is in the form of a square groove having a square cross section with constant width W and depth H. The other section 29B is tapered toward the airlock area X of the piston 23. In the cylinder 21, the area corresponding to the section 29A which has a constant groove-depth H is referred to as an air damping area Z, and the area corresponding to the section 29B, where the groove-depth H of which is reduced, is referred to as an air-damping reduction area Y.

In the piston 23, as shown in Figs. 5 and 6, an annular groove 31 is formed by cutting so that the outer edge of the piston 23 will be divided into a first flange 32A and a second flange 32B, and a notch 33 is formed on the second flange 32B so that the annular groove 31 and the rod-side chamber 28B can communicate with each other. In other words, the annular groove 31 is formed between the first flange 32A and a remaining portion of the second flange 32B in which the notch 33 is not formed. The O-ring 34 is set in the annular groove 31 and used as an elastic seal member.

The O-ring 34 comes closely into contact with the inner surface of the cylinder 21 and is set in the annular groove 31 such that a clearance is left between the O-ring 34 and the bottom 31A of the annular groove 31. As a result, a passage 35 is defined by the outer edge of the first flange 32A of the piston 23, the annular groove 31, the notch 33 and the inner surface of the cylinder 21. The O-ring 34 serves as a check valve, which strikes the wall 36 of the first flange 32A to close the passage 35 in the process of extending the gas spring 20, or which strikes the wall 37 of the second flange 32B to open the passage 35 in the process of compressing the gas spring 20.

As shown in Fig. 5, the piston 23 is a solid-core member without any passage such as an orifice for communicating between the piston-side chamber 28A and the rod-side chamber 28B. It is made from sintered alloy such as iron-sintered alloy, having open pores (not shown) for communicating between the piston-side chamber 28A and the rod-side chamber 28B.

Therefore, when the gas spring 20 is compressed, the O-ring 34 (Fig. 5) set in the piston 23 strikes the wall 37 of the second flange 32B to secure the passage 35, so that the air 25 within the piston-side chamber 28A flows through both the passage 35 and the cylinder groove 29 into the rod-side chamber 28B. For this reason, little or no damping force occurs in this compression process, which allows compression of the gas spring 20 quickly and hence closing the back door 4 quickly.

When the gas spring 20 is extended, a reaction force of the air 25 within the piston-side chamber 28A acts as an assisting force on the piston 23 and the rod 22 to move them in the extending direction. On the other hand, since the O-ring 34 (Fig. 5) of the piston 23 strikes the wall 36 of the first flange 28A to block the passage 35 by the O-ring 34, the air 25 within the rod-side chamber 28B flows into the piston-side chamber 28A only through the cylinder groove 29, so that extension damping force is generated by a flow resistance caused when the air 25 passes through the cylinder groove 29. When the piston 23 is in the air damping area Z of the cylinder 21, the extension speed of the piston 23 and the rod 22 is controlled by the extension damping force.

In the process of extending the gas spring 20, when the piston 23 is in the air-damping reduction area Y, the sectional area of the cylinder groove 29 (29B) is reduced primarily in proportion to only the depth of the cylinder groove 29 (29B). Therefore, the extension speed of the piston 23 and the rod 22 to be moved in the extending direction by the reaction force of the air from the piston-side chamber 28A are not slowed down suddenly when the piston 23 rushes from the air damping area Z into the air-damping reduction area Y.

Moreover, when the gas spring 20 has been fully extended at the end of the extending process, the piston 23 being in the airlock area X, the piston 23, the O-ring 34, the cylinder 21, the gas seal 27 and the rod guide 26 define an airlock chamber because the cylinder groove 29 does not appear in this area X. The air 25 within the airlock chamber flows into the piston-side chamber 28A through open pores of the piston 23 to move the piston 23 in the extending direction very slowly, thus performing damping operation properly when the gas spring 20 has been fully extended.

As previously described, the gas spring 20 includes the portions of the cylinder 21 in the air damping area Z and the air-damping reduction area Y, where the cylinder groove 29 is present, the piston 23, and the O-ring 34. These members constitute an extension damping force applying mechanism 36. The extension damping force applying mechanism 36 causes an extension damping force in the extending process. The gas spring 20 also includes the portion of the cylinder 21 in the airlock area X, where the cylinder groove 29 is not present, the gas seal 27, the rod guide 26, the piston 23, and the O-ring 34. These members constitute an airlock mechanism 37. The airlock mechanism 37 serves to damp the piston 23 and the rod 22 when the gas spring 20 has been fully extended at the end of the extending process.

In the gas spring 20 as constituted above, the Reynolds number Re of the air 25 passing through the cylinder grooves 29 becomes a critical Reynolds number Rec or more while the air 25 within the rod-side chamber 28B flows into the piston-side chamber 28A through the cylinder groove 29 during the extending process, so that a swish sound is generated.

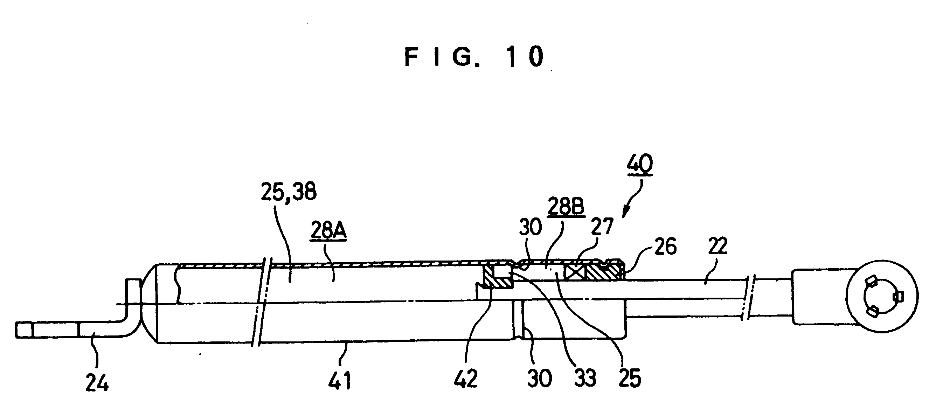

On the other hand, the gas spring 40 as shown in Figs. 10 to 13, in which the bracket 24 of a cylinder 41 is attached to the car body 17 of the vehicle 15 and the rod 22 is attached to the back door 16 of the vehicle 15. As with the gas spring 20, the gas spring 40 is used as an inverted position turning type gas spring, but it is designed to prevent the generation of the swish sound. In the gas spring 40, portions similar to those of the gas spring 20 are given the same reference numerals and therefore descriptions thereof are omitted.

The gas spring 40 includes the cylinder 41, a piston 42, the rod 22, a passage 43, and the air 25 serving as a reaction force applying mechanism, but it does not include the extension damping force applying mechanism 36 and the airlock mechanism 37 such as included in the gas spring 20.

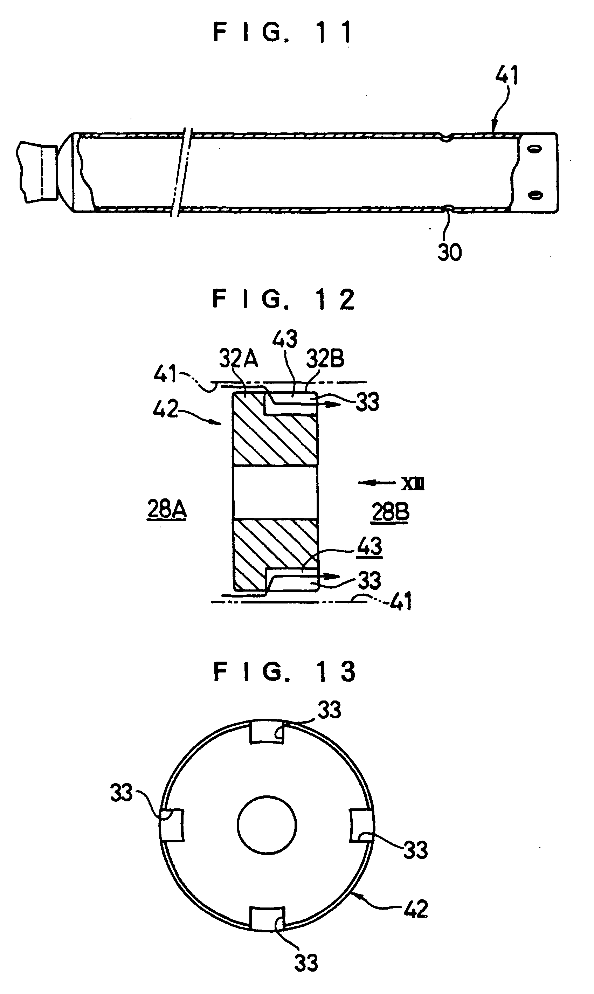

As shown in Figs. 10 and 11, the rod guide 26 and the gas seal 27 are arranged in an opening portion provided at one end of the cylinder 41, and the bracket 24 is fixed to a closed portion provided at the other end of the cylinder 41. The air 25 is enclosed in the cylinder 41 and the piston 42 is slidably arranged within the cylinder 41. The piston 42 is fixed by applying pressure to one end of the rod 22 that is guided by the rod guide 27. The cylinder 41 is different from the cylinder 21 of the gas spring 20 in that the cylinder groove 29 is not present.

Referring to Figs. 12 and 13, the piston 42 is a solid-core member, as similar to the piston 23, without any passage such as an orifice for communicating between the piston-side chamber 28A and the rod-side chamber 28B. The piston is made from sintered alloy such as iron-sintered alloy, having open pores (not shown) for communicating between the piston-side chamber 28A and the rod-side chamber 28B. The piston 42 also has the notches 33, but it differs from the piston 23 in that it does not have the annular groove 31. Therefore, the O-ring 34 is not set in the outer edge of the piston 42.

The passage 43 is defined among the outer edge of the piston 42, the notches 33, and the inner surface of the cylinder 41. In a typical liquid flowing through a pipe or the like, a swish sound is generated due to a turbulent flow caused when the Reynolds number Re becomes a critical Reynolds number Rec or more, whereas the swish sound is not generated when the sectional area of the pipe becomes larger than a given size to put the liquid into a laminar-flow state. For this reason, the sectional area of the passage 43 defined by a clearance between the outer edge of the piston 42 and the inner surface of the cylinder 41 is of a size to prevent both the swish sound and the damping force. Specifically, the area of the passage 43 is determined by eliminating the O-ring 34 such as used in the gas spring 20.

In the gas spring 40, as similar to the gas spring 20, the air 25 is enclosed in both the piston-side chamber 28A and the rod-side chamber 28B of the cylinder 41, so that the reaction force of the air 25 within the cylinder 41 serves as the reaction force applying mechanism 38 to force the piston 42 and the rod 22 in the extending direction when the gas spring 40 is extended.

Further in the gas spring 40, the cylinder groove 29 is not present in the cylinder 41 and the O-ring is not set in the piston 42, i.e., the extension damping force applying mechanism 36 and the airlock mechanism 37 are eliminated from the gas spring 40.

Accordingly, when the gas spring 40 is compressed, the air 25 within the piston-side chamber 28A flows into the rod-side chamber 28B through the passage 43 annularly formed between the outer edge of the piston 42 and the inner surface of the cylinder 41. In this case, the passage 43 is set to be a size sufficient to cause no damping force so that no compression damping force occurs, thereby compressing the gas spring 40 quickly.

When the gas spring 40 is extended, the air 25 within the rod-side chamber 28B flows into the piston-side chamber 28A through the passage 43. Since the sectional area of the passage 43 is made to a size sufficient to prevent the swish sound and the damping force, both the extension damping force and the swish sound do not occur. Further, since the passage 43 is formed as described above, the airlock chamber is not formed among the piston 42, the rod guide 26, and the gas seal 27, so that no air lock action occurs. It should be noted that the embodiment of the present invention does not necessarily eliminate the swish sound completely, and it allows generating a small amount of swish sound.

Next, operation of the back-door supporting device 14 will be described.

In the back-door supporting device 14, the back door 16 of the vehicle 15 is held by or mounted on the car body 17 with the gas spring 20 arranged on one side of the back door 16 and the gas spring 40 is arranged on the other side of the back door 16. The gas spring 20 includes the reaction force applying mechanism 38 utilizing the reaction force of the air from the piston-side chamber 28A, the extension damping force applying mechanism 36 such as the cylinder groove 29 and the like, and the airlock mechanism 37 such as the O-ring 34 and the like. The gas spring 40 includes only the reaction force applying mechanism 38 without the extension damping force applying mechanism 36 and the airlock mechanism 37.

When opening the back door 16, although the gas springs 20 and 40 cause an assisting force due to an action of both reaction force applying mechanisms 38 to force the back door 16 in an opening direction, the opening speed of the back door 16 is controlled or adjusted by the extension damping force of the extension damping force applying mechanism 36 of the gas spring 20. At this point, the gas spring 20 generates a swish sound when the air 25 passes through the cylinder groove 29, whereas the gas spring 40 generates no swish sound.

When the back door 16 approaches a full open position, the airlock mechanism 37 of the gas spring 20 acts on the back door 16 to slow down the opening speed sufficiently so that the back door 16 can stop in the full open position silently.

When closing the back door 16, both gas springs 20 and 40 create no compression damping force, so that the back door 16 can be closed quickly.

As previously described, according to the above embodiment, the gas spring 20 for supporting one side of the back door 16 includes the extension damping force applying mechanism 36 including the cylinder groove 29, and the airlock mechanism 37, in addition to the reaction force applying mechanism 38 utilizing the reaction force of the air from the piston-side chamber 28A. On the other hand, the gas spring 40 for supporting the other side of the back door 16 includes only the reaction force applying mechanism 38 without the extension damping force applying mechanism 36 and the airlock mechanism 37. Further, since the passage 43 for communicating between the chambers 28A and 28B divided by the piston 42 is formed with a sectional area that prevents a swish sound, the gas spring 40 does not generate any swish sound, while the gas spring 20 emits the swish sound from the cylinder groove 29 that is used as the extension damping force applying mechanism 36. As a result, the back-door supporting device 14 can reduce the total amount of the generated swish sound to a greater extent than in the case where only the two identical gas springs 20, each having the reaction force applying mechanism 38, the extension damping force applying mechanism 36, and the airlock mechanism 37, are used for supporting the back door 16.

The gas spring 40 for supporting the other side of the back door 16 does not have the cylinder groove 29 formed in the cylinder 41, the annular groove 31 formed in the piston 42, and the O-ring 34 in the piston 42, so that the cost of manufacturing the gas spring 40 is reduced.

The gas springs 20 and 40 are constituted with the same parts in the same manner except as to whether or not the cylinder groove 29 is formed, whether the O-ring 34 is present or absent, and whether or not the annular groove 31 is formed in the piston 23 or 42. It is therefore possible to use the required parts commonly between the gas springs 20 and 40, to reduce the cost of manufacturing the back-door supporting device 14.

In the back-door supporting device 14, the extension damping force applying mechanism 36 including the cylinder groove 29 is provided only in the gas spring 20, so that the reaction force of the air caused by both the reaction force applying mechanisms 38 of the gas springs 20 and 40 surpasses the extension damping force caused by the extension damping force applying mechanism 36 of the gas spring 20, thereby increasing the opening speed of the back door 16. The opening speed of the back door 16 is controlled or adjusted properly by reducing the sectional area of the cylinder groove 29 that is used as the extension damping force applying mechanism 36 of the gas spring 20. In other words, the swish sound can be prevented by setting the sectional area of the cylinder groove 29 to be small so that the Reynolds number Re of the air 25 flowing through the cylinder groove 29 becomes a critical Reynolds number Rec or more.

The reaction force applying mechanism 38 to be used in the gas spring 20 or 40 is not limited by the air within the piston-side chamber, and a coil spring provided between the closed end of the cylinder and the piston may be used instead of the air. In this case, a force of the coil spring is used as a reaction force to act on the piston and the rod.

Although the described embodiment of the back-door supporting device 14 in which two gas springs 20 and 40 are arranged on both sides of the back door 16, the back-door supporting device 14 may have two or more gas springs 20 arranged on one side of the back door 16 and two or more gas springs 40 arranged on the other side of the back door 16. The described embodiment also teaches that notches 33 are formed in the piston 42 of the gas spring 40, but such notches 33 may be eliminated. In the described embodiment, although the passage 43 of the gas spring 40 is formed as an annular clearance between the inner surface of the cylinder 41 and the outer edge of the piston 42, it may be formed through the piston 42.

The present invention can also be applied to other lid-structure supporting devices such as used in a copy machine. In this case, the door or lid structure is a cover of the copy machine.

As described above, according to the present invention, there is provided a device for supporting a lid or door structure, which reduces a swish sound and improves the cost efficiency.

While the preferred embodiments of the invention have been described in detail with reference to the drawings, they are by no means limitative, and various changes and modifications are possible without departing from the scope and spirit of the invention.

Although the invention has been illustrated and described with respect to several exemplary embodiments thereof, it should be understood by those skilled in the art that the foregoing and various other changes, omissions and additions may be made to the present invention without departing from the spirit and scope thereof. Therefore, the present invention should not be understood as limited to the specific embodiment set out above but to include all possible embodiments which can be embodied within the scope set out in the appended claims.

## Claims

1. A device for supporting a lid structure, in which gas springs arranged apart from each other support both sides of the lid structure that is pivotally affixed to a body through a horizontal shaft, one gas spring arranged on one side of the lid structure comprising:
a cylinder enclosing a gas, in which seal and guide members are arranged in an opening portion provided at one end thereof;
a rod having a piston at one end thereof and slidably arranged within said cylinder together with the piston through said seal and guide members;
a passage means provided in said piston for communicating between both cylinder chambers divided by said piston;
a reaction force applying mechanism disposed within said cylinder for causing a reaction force to move said rod in an extending direction when the gas spring is extended;
an extension damping force applying mechanism which includes a cylinder groove formed in an axial direction throughout the entire range of said cylinder except an area near the opening end portion thereof, and seal means arranged in said piston and having a check valve function for opening said passage when the gas spring is compressed, whereby an extension damping force is created while the gas passes through the cylinder groove in the extending process; and
a gas-lock mechanism which defines a gas-lock chamber near the opening end portion of said cylinder, with said seal and guide members, said piston, and said seal means, so as to damp said piston and said rod when the gas spring has been fully extended at the end of the extending process, and
the other gas spring arranged on the other side of the lid structure comprising:
a cylinder enclosing a gas, a seal, and guide members arranged in an opening portion provided at one end;
a rod having a piston at one end and slidably arranged within said cylinder together with the piston through said seal and guide members;
a passage means provided in said piston for communicating between both cylinder chambers divided by said piston, the sectional area of which is of a size sufficient to generate laminar flow resulting in little or no swish sound; and
a reaction force applying mechanism provided within said cylinder for causing a reaction force to force said rod in an extending direction when the gas spring is extended.

2. The device as set forth in claim 1, wherein said passage means provided in the gas spring disposed on the other side of the lid structure, for communicating between both cylinder chambers divided by said piston, is in the form of an annular clearance between the outer edge of said piston and the inner surface of said cylinder, the sectional area of which is of a size to produce little or no swish sound by eliminating seal means having a check valve function from the outer edge of said piston.

3. The device as set forth in claim 1 or 2, wherein said gas springs arranged on both sides of the lid structure are constituted with like parts in like manner except that one of said gas springs comprises said cylinder groove and said seal means having a check valve function and the other gas spring lacks both of these elements.

4. The device as set forth in any one of claims 1 to 3, wherein the sectional area of the cylinder groove is reduced toward the opening end portion of said cylinder.

5. The device as set forth in claim 4, wherein the sectional area of the cylinder groove is reduced toward the opening end portion of said cylinder primarily in proportion to only the depth of the cylinder groove.

6. The device as set forth in any one of claims 1 through 5, wherein said reaction force applying mechanism is in the form of air within the piston-side chamber.

7. The device as set forth in any one of claims 1 through 6, wherein said piston is formed of a sintered alloy.

## Patentansprüche

1. Vorrichtung zum Stützen einer Deckelstruktur, bei der voneinander beabstandete Gasfedern beide Seite der Deckelstruktur stützen, die schwenkbar an einem Rumpf durch eine horizontale Welle befestigt ist, wobei eine an einer Seite der Deckelstruktur angeordnete Gasfeder aufweist:
einen Zylinder, der ein Gas einschließt und in dem Dichtungs- und Führungselemente in einem an einem Ende davon vorgesehenen Öffnungsabschnitt angeordnet sind;
eine Stange mit einem Kolben an einem Ende davon, die in dem Zylinder zusammen mit dem Kolben durch die Dichtungs- und Führungselemente verschiebbar angeordnet ist;
eine Durchgangseinrichtung, die in dem Kolben zum Kommunizieren zwischen beiden durch den Kolben getrennten Zylinderkammern vorgesehen ist;
einen Mechanismus zum Aufbringen von Gegenkraft, der in dem Zylinder angeordnet ist, um eine Gegenkraft zum Bewegen der Stange in eine Ausfahrrichtung zu verursachen, wenn die Gasfeder ausgefahren wird;
einen Mechanismus zum Aufbringen von Ausfahrdämpfkraft, der eine in einer Axialrichtung über die gesamte Reichweite des Zylinders außer einem Bereich nahe dem Öffnungsendabschnitt davon ausgebildete Zylindernut aufweist, und Abdichtmittel, die in dem Kolben angeordnet sind und eine Rückschlagventilfunktion zum Öffnen des Durchgangs aufweisen, wenn die Gasfeder zusammengedrückt wird, wobei eine Ausfahrdämpfkraft erzeugt wird, während das Gas beim Ausfahrvorgang durch die Zylindernut hindurchtritt; und
einen Gasschleusenmechanismus, der eine Gasschleusenkammer nahe dem Öffnungsendabschnitt des Zylinders mit den Dichtungsund Führungselementen, dem Kolben und den Abdichtmitteln definiert, so daß der Kolben und die Stange gedämpft werden, wenn die Gasfeder am Ende des Ausfahrvorgangs vollständig ausgefahren worden ist, und
die andere an der anderen Seite der Deckelstruktur angeordnete Gasfeder aufweist:
einen Zylinder, der ein Gas, eine Dichtung und Führungselemente einschließt, die in einem an einem Ende vorgesehenen Öffnungsabschnitt angeordnet sind;
eine Stange mit einem Kolben an einem Ende, die in dem Zylinder zusammen mit dem Kolben durch die Dichtungs- und Führungselemente verschiebbar angeordnet ist;
eine Durchgangseinrichtung, die in dem Kolben zum Kommunizieren zwischen beiden vom Kolben getrennten Zylinderkammern vorgesehen ist und deren Querschnittsfläche eine ausreichende Größe aufweist, um eine laminare Strömung zu erzeugen, die zu einem geringen oder keinem Zischgeräusch führt; und
einen Mechanismus zum Aufbringen von Gegenkraft, der in dem Zylinder vorgesehen ist, zum Hervorrufen einer Gegenkraft, um die Stange in eine Ausfahrrichtung zu drängen, wenn die Gasfeder ausgefahren wird.

2. Vorrichtung nach Anspruch 1, bei der die in der Gasfeder, die an der anderen Seite der Deckelstruktur angeordnet ist, vorgesehene Durchgangseinrichtung zum Kommunizieren zwischen beiden durch den Kolben getrennten Zylinderkammern in Gestalt eines ringförmigen Freitraums zwischen dem äußeren Rand des Kolbens und der Innenfläche des Zylinders vorgesehen ist, deren Querschnittsfläche eine Größe aufweist, um ein geringes oder gar kein Zischgeräusch zu erzeugen, durch Eliminieren von Abdichtmitteln vom äußeren Rand des Kolbens, die eine Rückschlagventilfunktion aufweisen.

3. Vorrichtung nach Anspruch 1 oder 2, bei der die an den beiden Seiten der Deckelstruktur angeordneten Gasfedern mit gleichen Teilen und in gleicher Weise ausgebildet sind, außer dahingehend, daß oder daß nicht das Abdichtmittel mit der Zylindernut und der Rückschlagventilfunktion ausgebildet ist, und daß oder daß nicht an dem äußeren Rand des Kolbens eine ringförmige Nut ausgebildet ist, um das Abdichtmittel vorzusehen.

4. Vorrichtung nach einem der Ansprüche 1 bis 3, bei der die Querschnittsfläche der Zylindernut zum Öffnungsendabschnitt des Zylinders hin verringert ist.

5. Vorrichtung nach Anspruch 4, bei dem die Querschnittsfläche der Zylindernut zum Öffnungsendabschnitt des Zylinders hin in erster Linie im Verhältnis nur zur Tiefe der Zylindernut verringert ist.

6. Vorrichtung nach einem der Ansprüche 1 bis 5, bei der der Mechanismus zum Aufbringen der Gegenkraft in Gestalt von Luft in der kolbenseitigen Kammer ausgebildet ist.

7. Vorrichtung nach einem der Ansprüche 1 bis 6, bei der der Kolben aus einer gesinterten Legierung ausgebildet ist.

## Revendications

1. Dispositif de soutien de structure de capot, dans lequel des ressorts à gaz, disposés à distance l'un de l'autre, soutiennent des deux côtés une structure qui est fixée à un corps selon un axe horizontal et de façon à pouvoir pivoter autour de celui-ci, l'un de ces ressorts à gaz, placé d'un côté de la structure de capot, comprenant :
- un cylindre renfermant un gaz, dans lequel des éléments de guidage et d'étanchéité sont disposés dans une partie ouverte située à l'une des ses extrémités,
- une tige comportant un piston à l'une de ses extrémités et disposée de manière à pouvoir coulisser dans ledit cylindre, en même temps que le piston, au travers desdits éléments de guidage et d'étanchéité,
- un passage aménagé dans ledit piston, qui fait communiquer entre elles les deux chambres de cylindre séparées par le piston,
- un mécanisme d'application de force de réaction, disposé dans le cylindre et servant à faire qu'une force de réaction déplace ladite tige dans une direction d'extension lorsque le ressort à gaz est détendu,
- un mécanisme d'application de force d'amortissement d'extension, qui comporte une rainure aménagée dans la direction axiale sur toute la longueur dudit cylindre, sauf dans une zone voisine de ladite extrémité ouverte, et un moyen d'étanchéité disposé dans ledit piston et jouant le rôle d'un clapet anti-retour qui ouvre ledit passage quand le ressort à gaz est comprimé, grâce à quoi une force d'amortissement d'extension se crée quand le gaz passe dans la rainure longitudinale au cours du processus d'extension,
- et un mécanisme d'accumulation de gaz, qui définit une chambre d'accumulation de gaz à proximité de l'extrémité ouverte du cylindre, conjointement avec lesdits éléments d'étanchéité et de guidage, piston et moyen d'étanchéité, de manière à freiner le mouvement desdits piston et tige quand le ressort à gaz est complètement détendu à la fin du processus d'extension ; et l'autre ressort à gaz, placé de l'autre côté de la structure de capot, comprenant :
- un cylindre renfermant un gaz, dans lequel des éléments de guidage et d'étanchéité sont disposés dans une partie ouverte située à l'une des ses extrémités,
- une tige comportant un piston à l'une de ses extrémités et disposée de manière à pouvoir coulisser dans ledit cylindre, en même temps que le piston, au travers desdits éléments de guidage et d'étanchéité,
- un passage aménagé dans ledit piston, qui fait communiquer entre elles les deux chambres de cylindre séparées par le piston, et dont la section transversale est d'une taille suffisante pour qu'il se forme un écoulement laminaire, ne provoquant l'émission que d'un faible sifflement ou d'aucun bruit,
- et un mécanisme d'application de force de réaction, disposé dans le cylindre et servant à faire qu'une force de réaction déplace ladite tige dans une direction d'extension lorsque le ressort à gaz est détendu.

2. Dispositif conforme à la revendication 1, dans lequel ledit passage aménagé dans le ressort à gaz placé de l'autre côté de la structure de capot, qui fait communiquer entre elles les deux chambres de cylindre séparées par le piston, a la forme d'un espace annulaire entre le bord externe du piston et la surface interne du cylindre, dont la section transversale est d'une taille suffisante pour qu'il n'y ait émission que d'un faible sifflement ou d'aucun bruit grâce au fait qu'il n'y a pas, sur le bord extérieur du piston, de moyen d'étanchéité jouant le rôle de clapet anti-retour.

3. Dispositif conforme à la revendication 1 ou 2, dans lequel les ressorts à gaz disposés des deux côtés de la structure de capot sont constitués de pièces semblables et de façon similaire, sauf que l'un de ces ressorts à gaz comprend ladite rainure longitudinale et ledit moyen d'étanchéité jouant le rôle de clapet anti-retour, et l'autre ressort à gaz ne comprend aucun de ces deux éléments.

4. Dispositif conforme à l'une des revendications 1 à 3, dans lequel la section transversale de la rainure longitudinale diminue en direction de l'extrémité ouverte du cylindre.

5. Dispositif conforme à la revendication 4, dans lequel la section transversale de la rainure longitudinale diminue en direction de l'extrémité ouverte du cylindre, mais essentiellement à proportion de sa seule profondeur.

6. Dispositif conforme à l'une des revendications 1 à 5, dans lequel ledit mécanisme d'application de force de réaction est constitué par l'air qui se trouve dans la chambre située du côté du piston.

7. Dispositif conforme à l'une des revendications 1 à 6, dans lequel ledit piston est en alliage fritté.
